Europäisches Patentamt

European Patent Office

Office européen des brevets

(19)

(11) Veröffentlichungsnummer: **0 279 318 B1**

(12) **EUROPÄISCHE PATENTSCHRIFT**

(45) Veröffentlichungstag der Patentschrift: **24.06.92**

(51) Int. Cl.5: **G01N 1/22**

(21) Anmeldenummer: **88101816.2**

(22) Anmeldetag: **08.02.88**

(54) **Rohrförmige Sonde für die Gasentnahme aus offenen Leitungen.**

(30) Priorität: **16.02.87 DE 3704862**
**10.04.87 DE 8705323 U**

(43) Veröffentlichungstag der Anmeldung:
**24.08.88 Patentblatt  88/34**

(45) Bekanntmachung des Hinweises auf die
Patenterteilung:
**24.06.92 Patentblatt  92/26**

(84) Benannte Vertragsstaaten:
**AT CH DE FR GB LI**

(56) Entgegenhaltungen:
**DE-A- 2 411 834       DE-A- 3 303 371**
**DE-U- 1 645 944       DE-U- 7 105 986**
**FR-A- 1 529 583       US-A- 2 309 596**
**US-A- 2 550 669**

(73) Patentinhaber: **SIEMENS AKTIENGESELL-
SCHAFT
Wittelsbacherplatz 2
W-8000 München 2(DE)**

(72) Erfinder: **Dietrich, Wolfgang
Wiesenstrasse 4d
W-7517 Waldbronn 2(DE)**
Erfinder: **Wendt, Klaus, Dr. Dipl.-Phys.
Berliner Strasse 91
W-7500 Karlsruhe(DE)**

Rank Xerox (UK) Business Services

## Beschreibung

Die Erfindung bezieht sich auf eine rohrförmige Sonde für die Gasentnahme aus offenen Leitungen mit einem Kopfteil mit gasleitenden Öffnungen, einem Griffteil und einem die beiden verbindenden biegsamen Rohrabschnitt.

Derartige Sonden sind aus DE-A-2 411 834 und DE-A-3 303 371 bekannt.

Bevorzugtes Einsatzgebiet solcher Sonden ist die Abgasüberwachung bei Kraftfahrzeugen. Zur Gasentnahme bei laufendem Motor wird die über einen Schlauch mit einem Gasanalysegerät verbundene Sonde in das Auspuff-Endrohr eingeführt. Um Fehlmessungen durch Fremdgas zu vermeiden, beträgt die vorgeschriebene Eintauchtiefe zwischen 30 und 60 cm.

Da die Endrohre von Auspuff-Anlagen häufig gekrümmt sind, müssen die Sonden biegsam sein. Bekannte Sonden weisen deshalb einen biegsamen Teil in Form eines Kunststoff- oder eines korrosionsbeständigen Metall-Wellschlauchs auf. Das Einführen solcher Sonden in das gekrümmte Auspuff-Endrohr bedingt jedoch ein beidhändiges, umständliches Arbeiten. Bei Sonden mit biegsamen Kunststoff-Schlauchabschnitten ergeben sich zudem Schwierigkeiten bei erhöhten Abgas-Temperaturen oder durch örtliche Überhitzung; Sonden mit Metall-Wellschlauch sind bei häufigem Biege-Last-Wechsel einem schnellen Verschleiß unterworfen.

Es besteht demgemäß die Aufgabe, eine rohrförmige Sonde der eingangs genannten Art so auszubilden, daß ihre Verschleißfestigkeit und Temperaturbeständigkeit erhöht wird und daß ein einhändiges Handhaben der Sonde möglich ist.

Eine Lösung der Aufgabe ist mit Sonden zu erreichen, die die Merkmale der Ansprüche 1 oder 5 aufweisen.

Bei der Ausführung nach Anspruch 1 verleiht die innenliegende Schraubenfeder des biegsamen Abschnitts der Sonde eine relativ hohe Biegesteifigkeit. Der die Schraubenfeder umgebende biegsame Schlauch aus Kunststoff, der am Kopf- und am Griffteil gasdicht befestigt ist, dient als eigentliches Gasführungselement. Um mechanische oder thermische Schäden zu vermeiden, ist über den Kunststoffschlauch ein flexibler Metallschlauch gezogen, der ebenfalls mit Kopf- und Griffteil lösbar verbunden ist.

Bei der Ausführungsform der Sonde nach Anspruch 5, ist das eigentliche Gasführungselement des biegsamen Abschnitts in einem mechanisch robusten Biegeelement gelagert.

Das Biegeelement besteht hier aus einer mit Windungsberührung gewickelten Schraubenfeder, deren Windungen, vorzugsweise aus Federdraht mit rechteckigem Querschnitt, eine solche Vorspannung aufweisen, daß der biegsame Abschnitt nach einer durch eine radial angreifende Kraft bedingten Auslenkung wieder in die ursprüngliche gerade Stellung zurückfedert. Somit kann die Sonde mit einer Hand auch in ein gekrümmtes Auspuff-Endrohr eingeführt und wieder herausgezogen werden. Das Wickeln mit Vorspannung kann beispielsweise über einen Dorn geschehen, wobei der Federdraht in einem vorgegebenen Maß tordiert wird.

Als Gasführungselement können dünnwandige, längselastische Schlauchleitungen aus Kunststoff gewählt werden, deren Temperaturfestigkeit durch die sie umgebende Schraubenfeder wesentlich erhöht wird, insbesondere wird lokales Überhitzen an Biegestellen vermieden. Da das Gasleitungselement durch die Schraubenfeder auch mechanisch geschützt ist, sind dünnwandige und dementsprechend hochelastische biegsame Wellschläuche einsetzbar.

Zur Erläuterung der Erfindung sind in den Figuren 1 bis 3 Ausführungsbeispiele dargestellt.

Es zeigen

Figur 1 eine rohrförmige Sonde nach Anspruch 1,

Figur 2 eine Teilansicht des biegsamen Rohrabschnitts,

Figur 3 eine rohrförmige Sonde gemäß Anspruch 5.

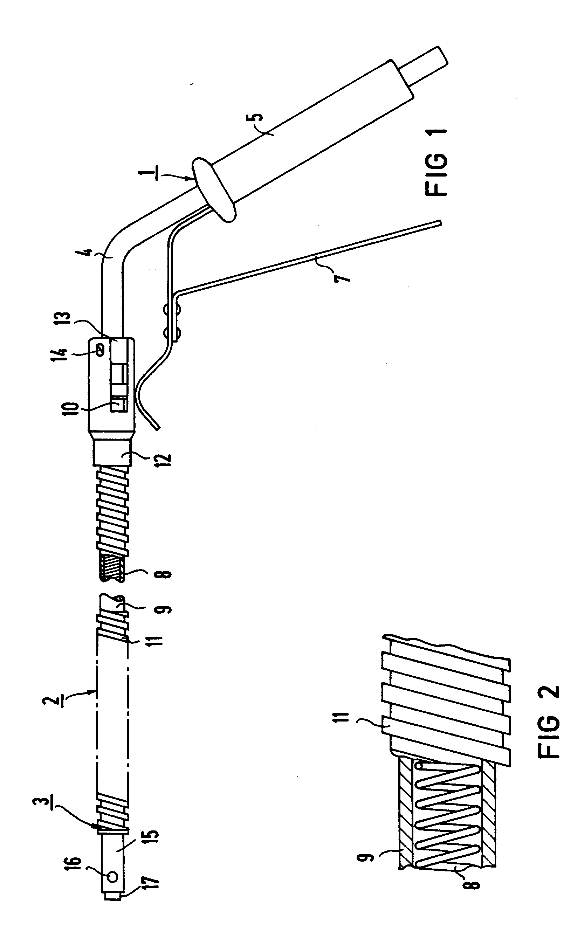

Die wesentlichen Teile der in Figur 1 darstellten rohrförmigen Sonde sind das Griffstück 1, ein biegsamer Rohrabschnitt 2 und ein Kopfteil 3.

Das Griffstück 1 besteht aus einem gebogenen Rohr 4, das mit einem Handgriff 5 umspritzt und am unteren Ende mit einem Anschlußstutzen 6 für die Zuleitung zum Gasanalysegerät verbunden ist.

Eine federnde Klammer 7 am Griffstück 1 dient zum Anklemmen der in ein Rohr eingeführten Sonde.

Der biegsame Rohrabschnitt 2 besteht aus einer Schraubenfeder 8 mit hoher Biegesteifigkeit, welche in das gebogene Rohr 4 des Griffstücks 1 fest eingesetzt ist.

Über die Schraubenfeder 8 ist ein relativ dünner und flexibler Kunststoffschlauch 9 gezogen, welcher mit einer Klemmschelle 10 an dem gebogenen Rohr 4 des Griffstücks 1 lösbar befestigt und abgedichtet ist.

Über den Kunststoffschlauch 9 ist ein biegsamer Metallschlauch 11 gezogen, welcher als Wellschlauch ausgeführt oder aus Metallgeflecht bestehen kann. Der biegsame Metallschlauch 11 ist mit dem Rohr 4 des Griffteils 1 über einen Klemmring 12 verbunden, der an einem Unterring 13 mittels Schrauben 14 befestigt ist.

Das Kopfteil 3 der Sonde besteht aus einer metallischen Hülse 15 von zylindrischer oder leicht konischer Form mit seitlichen Gaseintrittsöffnungen 16. Die Hülse 15 wird mit ihrem einen Ende zwischen Schraubenfeder 8 und Kunststoffschlauch 9 geschoben und dort durch die elastische Spannung des Kunststoffschlauchs abgedichtet.

Zur Befestigung der Hülse 15 dient eine Schraube 17, vorzugsweise eine Blechschraube, die axial in die Schraubenfeder 8 eingedreht und dort selbstklemmend gehalten wird.

Der Kunststoffschlauch 9 und der Metallschlauch 11 sind leicht auswechselbar. Sie lassen sich nach Entfernen des Kopfteils 3 und Lösen der Befestigungen am Griffstück 1 von der Schraubenfeder 8 abziehen und durch entsprechende neue Teile ersetzen.

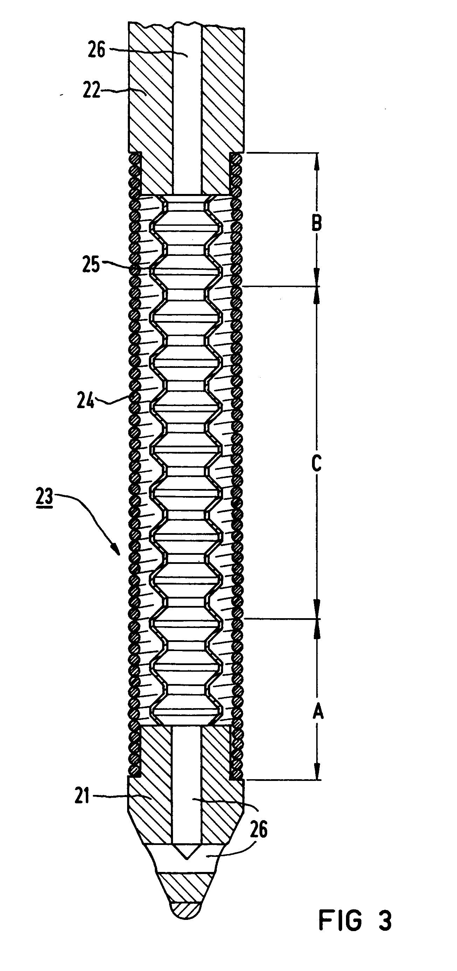

Die in Figur 3 im Längsschnitt dargestellte Ausführungsform einer Sonde nach Anspruch 5 besteht im wesentlichen aus einem zylindrischen Kopfteil 21 mit konisch zulaufender Spitze, einem hohlzylindrischen Griffteil 22 und einem die beiden Teile verbindenden biegsamen Rohrabschnitt 23.

Der biegsame Rohrabschnitt 23 besteht aus zwei Elementen, nämlich einer Schraubenfeder 24, deren Windungen bündig aneinanderliegen und die beim Wickeln mit einer solchen Vorspannung versehen wird, daß der Kopfteil 21 auch bei waagrechter Stellung der Sonde nicht absinkt. Die Schraubenfeder 24 ist an ihren beiden Enden mit dem Kopfteil 21 bzw. dem Griffteil 22 verbunden.

Als zweites Element weist der biegsame Rohrabschnitt 23 das eigentliche Gasführungselement 25 auf, das aus einer im Innern der Schraubenfeder 24 angeordneten Schlauchleitung besteht, die mit den gasleitenden Öffnungen 26 des Kopfteils 21 und des Griffstücks 22 verbunden ist. Da die notwendige Biegesteifigkeit und der Schutz vor mechanischen Beschädigungen durch die außenliegende Schraubenfeder 24 gewährleistet ist, kann das Gasführungselement 25 als dünnwandiger, längselastischer Kunststoffschlauch oder als dünnwandiger Metall-Wellschlauch ausgeführt sein.

Die einander berührenden Windungen der Schraubenfeder 24 können im Bedarfsfall mit unterschiedlicher Vorspannung gewickelt werden, um die Knickgefährdung zu verringern, die besonders an den Übergängen zu Kopfteil 21 bzw. Griffteil 22 besteht.

In einer bevorzugten Ausführungsform ist deshalb der mit dem Kopfteil 21 verbundene Endabschnitt A und der mit dem Griffteil 22 verbundene Endabschnitt B der Schraubenfeder 24 mit einer höheren Vorspannung gewickelt als der mittlere Abschnitt C.

## Patentansprüche

1. Rohrförmige Sonde für die Gasentnahme aus offenen Leitungen, mit einem Kopfteil (3) mit gasleitenden Öffnungen (16), einem Griffteil (1) und einem die beiden Teile verbindenden biegsamen Rohrabschnitt (2), **dadurch gekennzeichnet,** daß der biegsame Rohrabschnitt (2) besteht aus
   - einer Schraubenfeder (8) hoher Steifigkeit,
   - einem diese anliegend umgebenden, biegsamen Schlauch (9) aus Kunststoff,
   - einem über den Kunststoffschlauch (9) gezogenen biegsamen Metallschlauch (11).

2. Rohrförmige Sonde nach Anspruch 1, **dadurch gekennzeichnet,** daß der biegsame Schlauch (9) und der Metallschlauch (11) auswechselbar an Griffstück (1) und Kopfteil (3) befestigt sind.

3. Rohrförmige Sonde nach Anspruch 1, **dadurch gekennzeichnet,** daß der Metallschlauch (11) ein geflochtener oder ein Wellschlauch ist.

4. Rohrförmige Sonde nach Anspruch 1, **dadurch gekennzeichnet,** daß das Kopfteil (3) aus einer auf das vordere Ende der Schraubenfeder (8) aufschiebbaren, mit seitlichen Öffnungen (16) versehenen Metallhülse (15) besteht, welche mittels einer axial in die Schraubenfeder (8) eindrehbaren Schraube (17) befestigt ist.

5. Rohrförmige Sonde für die Gasentnahme aus offenen Leitungen, bestehend aus einem Kopfteil (21) mit gasleitenden Öffnungen (26), einem Griffteil (22) und einem die beiden Teile verbindenden biegsamen Rohrabschnitt (23), **dadurch gekennzeichnet,** daß der biegsame Rohrabschnitt (23) besteht aus
   - einer Schraubenfeder (24), deren Windungen bündig aneinanderliegend und mit einer solchen Vorspannung versehen sind, daß der Kopfteil (21) der Sonde bei waagrechter Stellung nicht absinkt;
   - einem im Innern der Schraubenfeder (24) koaxial angeordneten schlauchförmigen Gasführungselement (25).

6. Rohrförmige Sonde nach Anspruch 5, **dadurch gekennzeichnet,** daß die Schraubenfeder (24) aus Draht mit rechteckigem Querschnitt gewickelt ist.

7. Rohrförmige Sonde nach Anspruch 5 oder 6, **dadurch gekennzeichnet,** daß die Windungen der Schraubenfeder (24) mit unterschiedlicher Vorspannung gewickelt sind.

8. Rohrförmige Sonde nach Anspruch 5 oder 6, **dadurch gekennzeichnet,** daß die Windungen der Schraubenfeder (24) in ihren mit dem Kopfteil (21) bzw. dem Griffteil (22) verbundenen Endabschnitten (A, B) eine höhere Vorspannung aufweisen als im Mittelabschnitt (C).

9. Rohrförmige Sonde nach Anspruch 5, **dadurch gekennzeichnet,** daß das Gasführungselement (25) ein hochelastischer Wellschlauch ist.

10. Verwendung der Sonde nach einem oder mehreren der vorhergehenden Ansprüche bei der Abgasüberwachung der Brennkraftmaschinen von Kraftfahrzeugen.

## Claims

1. Tube-shaped probe for the withdrawal of gas from open pipes, having a head portion (3) with gas-conducting apertures (16), a handle portion (1) and a flexible tube section (2) joining the two portions, characterised in that the flexible tube section (2) comprises
   - a helical spring (8) of high rigidity,
   - a flexible plastics hose (9) closely surrounding this,
   - a flexible metal hose (11) drawn over the plastics hose (9).

2. Tube-shaped probe according to claim 1, characterised in that the flexible hose (9) and the metal hose (11) are replaceably secured on handle portion (1) and head portion (3).

3. Tube-shaped probe according to claim 1, characterised in that the metal hose (11) is an interwoven or a corrugated hose.

4. Tube-shaped probe according to claim 1, characterised in that the head portion (3) comprises a metal sleeve (15) which can be pushed on to the front end of the helical spring (8) and is provided with lateral apertures (16), the sleeve being secured by means of a screw (17) which can be axially rotated into the helical spring (8).

5. Tube-shaped probe for the withdrawal of gas from open pipes, comprising a head portion (21) with gas-conducting apertures (26), a handle portion (22) and a tube section (23) joining the two portions, characterised in that the flexible tube section (23) comprises
   - a helical spring (24) whose turns are closely adjacent and are provided with such a prestressing that the head portion (21) of the probe does not drop in a horizontal position;
   - a hose-shaped gas guiding element (25) arranged coaxially inside the helical spring (24).

6. Tube-shaped probe according to claim 5, characterised in that the helical spring (24) is wound from wire with a rectangular cross-section.

7. Tube-shaped probe according to claim 5 or 6, characterised in that the turns of the helical spring (24) are wound with different prestressing.

8. Tube-shaped probe according to claim 5 or 6, characterised in that in their end sections (A, B) connected to the head portion (21) and the handle portion (22) the turns of the helical spring (24) have a greater prestressing than in the middle section (C).

9. Tube-shaped probe according to claim 5, characterised in that the gas guiding element (25) is a highly resilient corrugated hose.

10. Use of the probe according to one or more of the preceding claims in the exhaust gas monitoring of internal combustion engines of motor vehicles.

## Revendications

1. Sonde tubulaire pour le prélèvement d'un gaz dans des conduites ouvertes, comprenant une pièce de tête (3) à orifices de passage (16) du gaz, une pièce de préhension (1) et une section tubulaire souple (2) réunissant ces deux pièces, caractérisée en ce que la section tubulaire souple (2) est constituée
   - d'un ressort hélicoïdal (8) de grande raideur,
   - d'un conduit souple (9) en matière plastique entourant le ressort hélicoïdal en s'y appliquant,
   - d'un tuyau métallique souple (11) engagé sur le conduit en matière plastique (9).

2. Sonde tubulaire selon la revendication 1, caractérisée en ce que le conduit souple (9) et le tuyau métallique (11) sont fixés de manière amovible à la pièce de préhension (1) et à la pièce de tête (3).

3. Sonde tubulaire selon la revendication 1, caractérisée en ce que le tuyau métallique (11) est un tuyau tressé ou un tuyau onduleux flexible.

4. Sonde tubulaire selon la revendication 1, caractérisée en ce que la pièce de tête (3) est constituée d'une douille métallique (15), qui peut être glissée sur l'extrémité antérieure du ressort hélicoïdal (8), qui est munie d'orifices (16) latéraux et qui est fixée au moyen d'une vis (17) pouvant être vissée axialement dans le ressort hélicoïdal (8).

5. Sonde tubulaire pour le prélèvement d'un gaz dans des conduites ouvertes, constituée d'une pièce de tête (21) à orifices de passage (26) du gaz, d'une pièce de préhension (22) et d'une section tubulaire souple (23) réunissant ces deux pièces, caractérisée en ce que la section tubulaire (23) souple est constituée
   - d'un ressort hélicoïdal (24) dont les spires sont jointives et qui est préarmé au point que la pièce de tête (21) de la sonde ne s'abaisse pas lorsque la sonde est en position horizontale;
   - d'un élément de passage du gaz (25) en forme de tuyau disposé coaxialement à l'intérieur du ressort hélicoïdal (24).

6. Sonde tubulaire selon la revendication 5, caractérisée en ce que le ressort hélicoïdal (24) est constitué d'un fil métallique de section transversale rectangulaire.

7. Sonde tubulaire selon la revendication 5 ou 6, caractérisée en ce que les spires du ressort hélicoïdal (24) sont enroulées avec un préarmement différent.

8. Sonde tubulaire selon la revendication 5 ou 6, caractérisée en ce que les spires du ressort hélicoïdal (24) comportent, dans leurs sections d'extrémité (A, B) communiquant avec la pièce de tête (21) et avec la pièce de préhension (22), un préarmement plus élevé que dans la section médiane (C).

9. Sonde tubulaire selon la revendication 5, caractérisée en ce que l'élément de passage du gaz (25) est un tuyau onduleux hautement élastique.

10. Utilisation de la sonde suivant l'une des revendications précédentes pour le contrôle des gaz d'échappement de moteurs à combustion interne de véhicules automobiles.

FIG 1

FIG 2

FIG 3